# EUROPÄISCHE PATENTSCHRIFT

(11) **EP 3 113 133 B1**
(45) Veröffentlichungstag und Bekanntmachung des Hinweises auf die Patenterteilung: **09.08.2023**
(21) Anmeldenummer: 15192639.1
(22) Anmeldetag: 02.11.2015
(51) Int. Cl.: G08B 17/10, G01N 21/94, G01N 21/954, G02B 6/10, G02B 6/00, G01N 21/958, G08B 29/14, G01N 21/552, G08B 29/04

(54) **RAUCHMELDER MIT KOMBINIERTER ABDECKUNGS- UND PARTIKELDETEKTION DER RAUCHEINGANGSÖFFNUNG**
SMOKE DETECTOR WITH COMBINED COVERAGE AND PARTICLE DETECTION AT THE SMOKE INLET OPENING
DETECTEUR DE FUMEE DOTE D'UN DISPOSITIF COMBINE DE DETECTION DE PARTICULE ET DE RECOUVREMENT DE L'ORIFICE D'ENTREE DE FUMEE

(30) Priorität: 29.06.2015 DE 102015110393
(43) Veröffentlichungstag der Anmeldung: 04.01.2017
(73) Patentinhaber: HAGER SAFETY Deutschland GmbH, 66440 Blieskastel (DE)
(72) Erfinder: Kroh, Christoph, 65510 Idstein (DE); Viertel, Tobias, 65527 Niederseelbach (DE); Schaaf, Norbert, 65343 Eltville (DE); Hentschel, Manfred, 65462 Ginsheim (DE)
(74) Vertreter: Fuchs Patentanwälte Partnerschaft mbB

(56) Entgegenhaltungen:
- EP-A1- 0 817 148
- EP-A1- 1 857 989
- EP-A1- 1 870 866
- EP-A1- 2 320 399
- EP-A1- 2 330 577
- EP-A2- 2 028 631
- EP-B1- 2 028 631
- DE-A1-102011 083 455
- DE-A1-102013 003 614
- JP-A- H04 250 344
- JP-A- H04 250 345
- US-A1- 2007 152 840
- US-A1- 2009 127 465

## Beschreibung

Rauchmelder dienen der frühzeitigen Erkennung von Bränden. Es existieren verschiedene Detektionsprinzipien, so genannte radioaktive oder optische Streulichtmelder, um nur zwei zu nennen. Rauchmelder, die für den Einsatz in gewerblichen oder industriellen Anlagen vorgesehen sind, müssen den Eigenschaften und Funktionen unter anderem der DIN EN 54-ff genügen.

Rauchmelder, die für Wohnhäuser, Wohnungen oder Räume mit wohnungsähnlicher Nutzung verwendet werden sollen, müssen teilweise andere Anforderungen erfüllen als die Industriemelder gemäß DIN EN 54, da diese Rauchmelder nicht Bestandteil einer Brandmeldeanlage sind. Der Bedarf des Kunden ist in diesem Fall ein Standalone Rauchmelder, der, im Gegensatz zu den Industriemeldern, auch über die Alarmanzeigefunktion verfügt sowie über einen Alarmgeber, der den anwesenden Nutzer auf eine Gefahr hinweist. Des Weiteren muss der Rauchmelder, der als Standalone Rauchmelder betrieben wird, über eine eigene Spannungsversorgung verfügen, da er nicht über ein Leitungsnetz von der Brandmelderzentrale, wie bei Industriemeldern, versorgt wird.

Da in den einzelnen europäischen Ländern verschiedene Normen für Rauchmelder vorhanden waren, wurde vom CEN/TC72 auf europäischer Ebene die europäische Norm DIN EN 14604 "Rauchmelder" als Produktnorm für den Wohnbereich erarbeitet. Diese europäische Norm ist von der europäischen Kommission und der europäischen Freihandelszone im Rahmen der EU-Bauproduktenrichtlinie (BPR) mandatiert und bildet die Prüfgrundlage für das mit der BPR harmonisierte Bauprodukt "Rauchmelder". Wenn derartige Rauchmelder nach der DIN EN 14604-Norm geprüft wurden, besteht die Vermutung, dass der Interessent bzw. Anwender mehr Sicherheit bezüglich des Leistungs- und Qualitätsstandards der so genannten Heimrauchmelder erhält. Die DIN EN 14604 ist seit 01.08.2008 gültig.

Dies bedeutet, dass nur Rauchmelder, die dieser Norm, von einem zertifizierten Prüfinstitut bestätigt, genügen, in der europäischen Freihandelszone in Verkehr gebracht werden dürfen.

Ein Rauchmelder im privaten Bereich, wenn er denn installiert ist, wird anschließend vom privaten Nutzer nicht mehr als zu wartendes Gerät wahrgenommen. Es gibt Anwendungsnormen für solche Rauchmelder, die aber dem privaten Nutzer meistens nicht bekannt sind und auch keinen Vorschriftencharakter haben, so dass zyklische Überprüfungen des Gerätes während des Betriebs in der Regel nicht vorgenommen werden.

Untersuchungen haben ergeben, dass eine sehr hohe Prozentzahl der installierten Rauchmelder nach einiger Zeit in Betrieb oft schon nach ein paar Jahren nicht mehr vollständig funktionierten, weil durch Umgebungseinflüsse die Hauptfunktion Rauchdetektion wesentlich eingeschränkt worden ist. Diese Einschränkung wurde hauptsächlich hervorgerufen von einer Verstaubung der Raucheintrittsöffnungen aufgrund der am jeweiligen Installationsort herrschenden Umgebungsbedingungen. Weiterhin wurde festgestellt, dass doch eine nicht unerhebliche Anzahl von Rauchmeldern nach Renovierung überstrichen worden sind oder Reste von Klebeband, das zum Schutz des Rauchmelders während der Renovierungsarbeiten angebracht worden ist, sich noch auf dem Rauchmelder befanden.

Üblicherweise werden in den Bedienungsanleitungen Hinweise auf solche Arbeiten gegeben, jedoch kann man davon ausgehen, dass diese nach ein paar Jahren nicht mehr vorhanden sind oder auch schlicht ignoriert werden, da diese Rauchmelder ausschließlich im privaten Bereich Verwendung finden. Das Abschließen von Wartungsverträgen für solche Melder im privaten Bereich ist nicht standardisiert und auch nicht vorgeschrieben, so dass man von einer verschwindend geringen Anzahl derartiger Verträge ausgehen muss.

Bekannte Rauchmelder funktionieren so: Eine Sendediode (LED) strahlt in eine Rauchkammer ab. Verschiedene Blenden oder Blendenfunktionen verhindern einen direkten Lichteintritt in eine Empfangsdiode. Befinden sich jedoch Partikel, z. B. Rauchpartikel, in der Rauchkammer, dann wird Licht von den Partikeln reflektiert und von der Empfangsdiode festgestellt. Es ist also von höchster Bedeutung, dass Rauchpartikel in die Rauchkammer gelangen können.

Gemäß der EP 2 028 631 A2 wird ein Rauchmelder für geschlossene Räume mit einem Gehäuse, das eine Raucheintrittsöffnung aufweist und das eine separate Rauchkammer mit einer Rauchkammer-Raucheintrittsöffnung beherbergt, in der eine Messelektronik angeordnet ist, die bei Detektion von Rauchpartikeln ein auswertbares Messsignal generiert, wobei mindestens eine im Gehäuse angeordnete Sendediode vorgesehen ist, deren Sendesignale durch mindestens ein transparentes Medium an mindestens eine Empfangsdiode geleitet wird, welche zum Empfang der Sendesignale von der mindestens einen Sendediode vorgesehen ist. Das lichtleitende Medium fasst die Raucheingangsöffnung im Gehäuse ein, wobei aus einer Veränderung der empfangenen Sendesignale an der mindestens einen Empfangsdiode auf eine zumindest teilweise Abdeckung der Raucheingangsöffnung im Gehäuse und/oder auf Partikel in der Raucheingangsöffnung in dem Gehäuse geschlossen und ein Warnsignal generiert wird.

Das Dokument JPH04250344 offenbart einen Rauchmelder, bei dem die Raucheingangsöffnung durch zwei transparenten lichtleitenden Medien gebildet ist, wobei einem lichtleitenden Medium eine Sendediode zugeordnet ist und dem anderen lichtleitenden Medium eine Empfangsdiode zugeordnet ist,

wobei aus einer Veränderung der empfangenen Sendesignale an mindestens einer Empfangsdiode auf eine zumindest teilweise Abdeckung der Raucheingangsöffnung im Gehäuse und/oder auf Partikel in der Raucheingangssöffnung in dem Gehäuse geschlossen und ein Warnsignal generiert wird.

Ziel dieser Erfindung ist es, das Überstreichen oder das Überkleben oder eine Verschmutzung durch bspw. Staubpartikel der Raucheingangsöffnung in dem Gehäuse eines Rauchmelders festzustellen und zu prüfen, ob eine normgerechte Rauchdetektion weiterhin gewährleistet ist, indem durch dieser Erfindung zugrunde liegenden Maßnahmen vom Melder selbst festgestellt wird, ob eine Veränderung der Raucheingangsöffnungen im Gehäuse in der Weise vorliegt, dass eine ausreichender Raucheintritt nicht mehr gewährleistet wird.

Ziel der Erfindung ist mit anderen Worten das Feststellen, ob die Raucheintrittsöffnung in dem Gehäuse des Rauchmelders frei ist und nicht durch Klebeband, Staub oder andere Ursachen soweit verschlossen ist, dass eine normgerechte Rauchdetektion verhindert wird.

Das Ziel wird erreicht durch einen Rauchmelder nach Patentanspruch 1.

Dadurch, dass die Raucheingangsöffnung in dem Gehäuse durch den Spalt zwischen den Lichtleitern gebildet wird, ergibt sich eine ganz besondere Empfindlichkeit und Genauigkeit der Überprüfung der Funktionsfähigkeit des Rauchmelders. Bei Verwendung von zwei Sendedioden ist sogar die Möglichkeit gegeben, bei einer Funktionsunfähigkeit des Rauchmelders zu unterscheiden, ob diese auf eine Abdeckung oder auf Partikel in der Raucheingangsöffnung in dem Gehäuse zurückzuführen ist.

Es besteht die Möglichkeit, dass die einander zugewandten Seiten der transparenten lichtleitenden Medien plan sind.

Alternativ kann vorgesehen sein, dass die einander zugewandten Seiten der transparenten lichtleitenden Medien auf ihren Oberflächen lichteinkoppelnde Stellen und lichtauskoppelnde Stellen aufweisen, die so zueinander ausgerichtet sind, dass Licht aus den lichtaustretenden Stellen des einen Mediums ausgekoppelt und direkt in die lichteinkoppelnden Stellen des anderen Mediums eingekoppelt wird.

Durch diese besondere Form der Innenseite der jeweiligen lichtleitenden Medien kann eine bewusste Auskopplung eines Teils des von der Sendediode ausgesandte Lichtstrahls erreicht werden, wobei der entsprechende gegenüberliegende Teil des jeweils anderen Mediums parallel angeordnet ist. Damit wird erreicht, dass der ausgekoppelte Lichtstrahl nahezu ohne Verlust in das andere Medium eingekoppelt wird, was zur Folge hat, dass bei einer Verschmutzung oder einer Verstaubung innerhalb der beiden Medien der gesendete ausgekoppelte Lichtstrahl gedämpft wird, entweder durch Absorption oder durch Reflektion an der Verschmutzung oder an den Partikeln, welche die Verschmutzungen verursachen, und somit dementsprechend eine verringerte Lichtstärke an der Empfangsdiode festgestellt wird.

Gemäß verschiedener Ausführungsformen können die Sendedioden IR-Sendedioden oder aber Leuchtdioden sein, die sichtbares Licht abstrahlen. Die Empfangsdioden sind für die verwendeten Sendedioden entsprechend auszuwählen.

Somit können zwei IR-Sendedioden und zwei IR-Empfangsdioden vorgesehen sein.

Die Erfindung wird nachfolgend anhand zweier Ausführungsbeispiele gemäß den Zeichnungsfiguren näher erläutert. Hierbei zeigt:
- Fig. 1: die schematische Aufsicht (a) und einen schematischen Querschnitt (b) eines erfindungsgemäßen Rauchmelders,
- Fig. 2: zwei parallel geführte Lichtleiter mit jeweils einer IR-Sendediode und IR-Empfangsdiode,
- Fig. 3: eine Ansicht wie in Fig. 2 mit Lichtleitern mit modifizierten Oberflächen,
- Fig. 4: eine perspektivische Ansicht einer speziellen Ausführungsform, die nicht Teil der beanspruchten Erfindung ist, des transpatenten lichtleitenden Mediums mit in seiner Ringöffnung angeordneten teilweise gebrochen dargestellten Rauchkammer, und

- Fig. 5: eine schematische Schnittansicht eines Rauchmelders mit der Anordnung gem. Fig. 4.

Nachfolgend sind gleiche Teile mit denselben Bezugszeichen versehen.

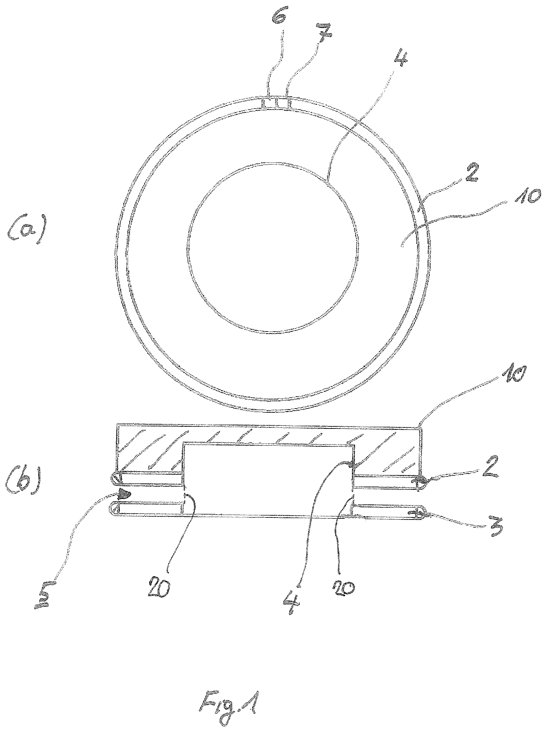

Figur 1 zeigt eine schematische Aufsicht (a) eines Rauchmelders. Dieser weist ein Gehäuse 10 auf, welches eine separate Rauchkammer 4 beherbergt. Dieser Rauchkammer 4 wird im Brandfall durch die Raucheingangsöffnung 5 in dem Gehäuse 10 Rauch zugeführt, welcher von einer in der Rauchkammer 4 angeordneten Messelektronik (nicht dargestellt) erkannt wird. Diese generiert ein auswertbares Messsignal, in der Regel ein Alarmsignal. Die Rauchkammer 4 weist ihrerseits eine Raucheintrittsöffnung 20 auf, die typischerweise bspw. mit einem Netz bespannt ist, welches Staub oder auch Insekten von dem Inneren der Rauchkammer fernhält.

Damit der Rauchmelder bestimmungsgemäß funktioniert, muss sichergestellt sein, dass die Rauchpartikel auch das Innere der Rauchkammer 4 erreichen. Dies muss dementsprechend über eine Messanordnung erfasst werden. In dem Fall, dass die Rauchpartikel das Innere der Rauchkammer 4 nicht erreichen, bspw. aufgrund einer Abdeckung oder Verstaubung, muss ein entsprechendes Warnsignal generiert werden.

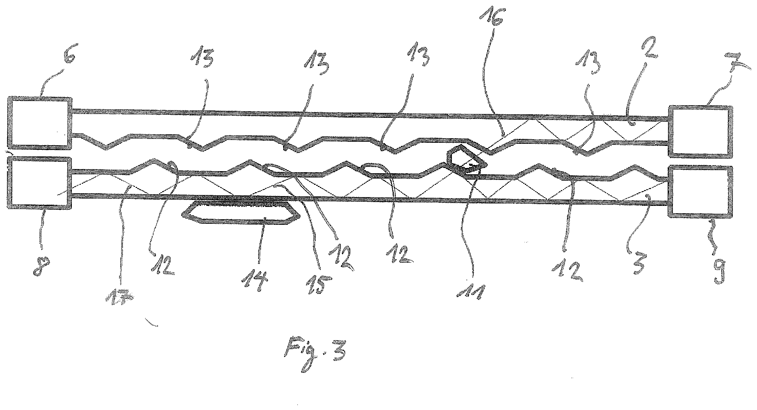

Wie sich aus dem schematischen Querschnitt der Figur 1b ergibt, besteht die erfindungsgemäße Messanordnung aus zwei parallel angeordneten, transparenten lichtleitenden Medien 2 und 3, die vorliegend als Lichtleiter ausgebildet sind. Die Anordnung ist dergestalt, dass die Lichtleiter 2 und 3 die Raucheingangsöffnung 5 in dem Gehäuse 10 einfassen bzw. der Spalt zwischen den Lichtleitern 2 und 3 die Raucheingangsöffnung 5 des Gehäuses 10 bilden. Diese Messanordnung macht sich die physikalischen Tatsachen zu nutzen, die weiter oben im Einzelnen beschrieben sind. Hierauf wird bei der Beschreibung des konkreten Ausführungsbeispiels der transparenten Medien gemäß Figur 3 nochmals eingegangen.

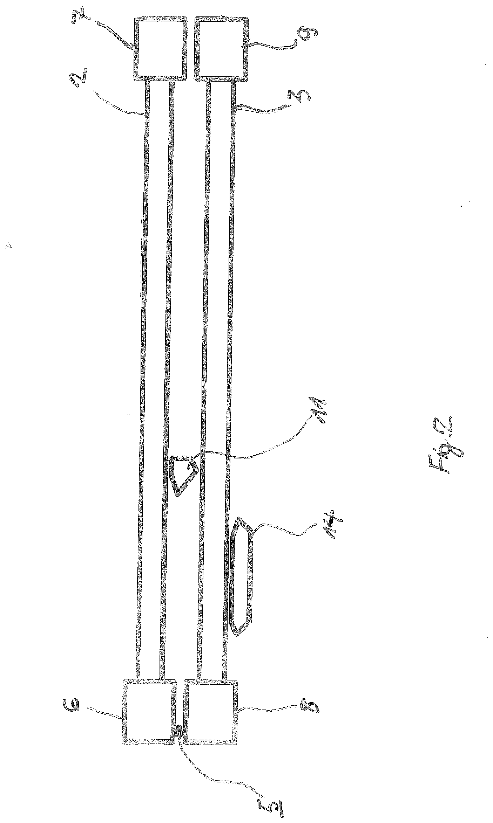

Figur 2 zeigt vergrößert die Anordnung der beiden Lichtleiter 2 und 3. Jedem dieser Lichtleiter 2 und 3 ist eine IR-Sendediode 6 bzw. 8 zugeordnet, deren Sendesignale durch die parallel angeordneten Lichtleiter 2 und 3 an zwei IR-Empfangsdioden 7 und 9 geleitet werden. Diese sind auf den Empfang der Sendesignale von den IR-Sendedioden abgestimmt.

Der zwischen den Lichtleitern 2 und 3 begrenzte Spalt bildet die Raucheingangsöffnung 5 des Gehäuses 10. Bei keiner Verschmutzung der Raucheingangsöffnung 5 wird das Signal von der IR-Sendediode 6 durch den Lichtleiter 2 ungedämpft von der IR-Empfangsdiode 7 empfangen. Entsprechendes gilt für Signale, die von der IR-Sendediode 8 in den Lichtleiter 3 eingekoppelt werden und von der IR- Empfangsdiode 9 empfangen werden. In diesem Falle weisen die Empfangssignale die maximale Signalstärke auf.

Ganz anders verhält es sich dagegen, wenn durch Verstaubung durch Partikel 11 die Transmission der IR-Sendesignale beeinflusst wird. Entsprechendes gilt, wenn die Raucheingangsöffnung 5 durch beispielsweise Verklebungen, hier exemplarisch dargestellt als Verklebung 14, beeinträchtigt wird. Während im unverschmutzten Zustand der Raucheingangsöffnung 5 die IR-Sendesignale durch Totalreflexion in den Lichtleitern 2 und 3 praktisch unbeeinträchtigt zu den IR- Empfangsdioden 7 und 9 gelangen, stören Partikel 11 oder die Verklebung 14 die ungehinderte Ausbreitung der Sendesignale. Im Falle der Verschmutzung durch Partikel 11 findet hier eine Transmissionsdämpfung statt. Im Falle einer Verklebung 14 wird die Totalreflexion in dem Lichtleiter 3 gestört und entsprechende Signalanteile werden absorbiert. Entsprechend geringer fallen die Signalstärken für der Empfangssignale in den Empfangsdiode 7 und 9 aus.

Diese Veränderungen werden verglichen mit dem optimalen Fall, wenn nämlich keinerlei Verschmutzung vorhanden ist. Ab einem einstellbaren Schwellenwert wird in einer Elektronik (nicht dargestellt) ein entsprechendes Warnsignal generiert. Hierbei kann differenziert werden zwischen einer Störung aufgrund einer Verstopfung durch Partikel 11 oder einer Verklebung 14. Dies aufgrund der unterschiedlichen Einflüsse der Störungen auf die Weiterleitung der Sendesignale, wie erwähnt.

Bei dem Ausführungsbeispiel gemäß Figur 2 sind die einander zugewandten Seiten der Lichtleiter 2 und 3 plan. Anders hingegen bei dem Ausführungsbeispiel gemäß Figur 3:
Darin ist eine Ausführungsform dargestellt, bei der die einander zugewandten Seiten der Lichtleiter 2 und 3 auf ihren Oberflächen lichteinkoppelnde Stellen 13 und lichtauskoppelnde Stellen 12 aufweisen, die so zueinander ausgerichtet sind, dass Licht aus den lichtaustretenden Stellen 12 des Lichtleiter 3 ausgekoppelt und direkt in die lichteinkoppelnden Stellen 13 des anderen Lichtleiters 2 eingekoppelt wird.

Dies soll nachfolgend noch näher erläutert werden:
Gemäß Figur 3 wird von einer IR-Sendediode 6 ein Lichtstrahl generiert, der über den Lichtleiter 2 zur Empfangsdiode 7 gelangt. Über den zweiten Lichtleiter 3 gelangt ein Lichtstrahl von der Sendediode 8 zur Empfangsdiode 9. Die Innenseite der zwei Lichtleiter 2 und 3 ist so gestaltet, dass an den Punkten 12 der Lichtstrahl bewusst ausgekoppelt wird und über den Spalt zwischen den Lichtleitern 2 und 3, der die Raucheingangsöffnung 5 des Gehäuses 10 darstellt, zur Fläche 13 gelangt, über die der Lichtstrahl in den anderen Lichtwellenleiter 2 eingekoppelt wird. Im Falle einer Verklebung durch einen Gegenstand 14 wird durch die Änderung der Totalreflektion an dieser Stelle ein Teil des Lichtstrahls ausgekoppelt, so dass an der Empfängerdiode 7 ein reduzierter Signalwert festgestellt wird. Im Falle einer Verschmutzung durch Partikel 11 innerhalb der Raucheingangsöffnung 5 wird der an der Stelle der Fläche 12 bewusst ausgekoppelte Strahl durch das Partikel 11 gedämpft und gelangt somit gar nicht oder nur teilweise über die Fläche 13 in den Lichtwellenleiter 3. In diesem Fall wird an der Empfängerdiode 9 ein reduziertes Signal festgestellt werden. Das heißt, über einen ausgesendeten Lichtstrahl der Sendediode 6 kann sowohl eine Verklebung oder Verschmutzung außen am Lichtwellenleiter 3 festgestellt werden sowie eine Verschmutzung in der Raucheingangsöffnung 5 durch ein Partikel 11, und zwar jeweils an den Empfangsdioden 7 oder 9 oder an beiden Empfangsdioden.

Zur Veranschaulichung der Verhältnisse innerhalb der Lichtleiter 2 und 3 sind mit 17 ein möglicher Strahlengang in ungedämpften Verhältnissen ( also ohne Verklebung oder Verstaubung), mit 15 ein durch die Verklebung 14 gedämpfter Strahlengang aufgrund geänderter Totalreflexion und mit 16 ein weiterer, durch das Partikel 11 geänderter Strahlengang aufgrund von Absorption oder Reflexion bezeichnet.

In einer weiteren Ausführungsvariante können sowohl die Sendedioden 6 und 8 als auch die Empfängerdioden 7 und 9 als Transceiver ausgebildet sein, so dass sie senden und empfangen können. Somit ist es möglich, die beiden Lichtleiter 2 und 3 in beiden Richtungen zu verwenden.

Weicht die empfangene Lichtstärke an der Empfangsdiode um einen vorher durch verschiedene Tests festgestellten Betrag ab und unterschreitet ein in der Elektronik bzw. in der Auswerteeinheit festgelegtes Minimum, so wird in einer Ausführungsvariante eine Störungsmeldung generiert.

Wesentlich an dieser Stelle hervorzuheben ist, dass die Messelektronik in der Rauchkammer 4 unabhängig ist von der Elektronik, mit welcher die Durchgängigkeit der Raucheingangsöffnung 5 des Gehäuses 10 festgestellt wird. Dies hat folgende Bewandtnis: mit den mindestens zwei IR-Sendedioden und den mindestens zwei IR-Empfangsdioden wird die Durchgängigkeit bzw. der Abdeckungsgrad der Raucheingangsöffnung 5 im Gehäuse 10 ermittelt. Falls festgestellt wird, dass der Rauchmelder aufgrund eines gewissen Abdeckungsgrades nicht mehr normgerecht arbeiten kann, kann ein entsprechendes Warnsignal erzeugt werden, welches Aufschluss darüber gibt, dass im Brandfalle Rauch nicht mehr zügig genug in die Rauchkammer 4 eindringen kann, um von der eigentlichen Messelektronik für die Rauchpartikel erkannt zu werden. Die IR-Sendedioden, die Lichtleiter und die IR-Empfangsdioden bilden zusammen mit der Auswerteelektronik also ein vorgeschaltetes System, mittels dessen die Funktionsfähigkeit des Rauchmelders selbst überprüft werden kann.

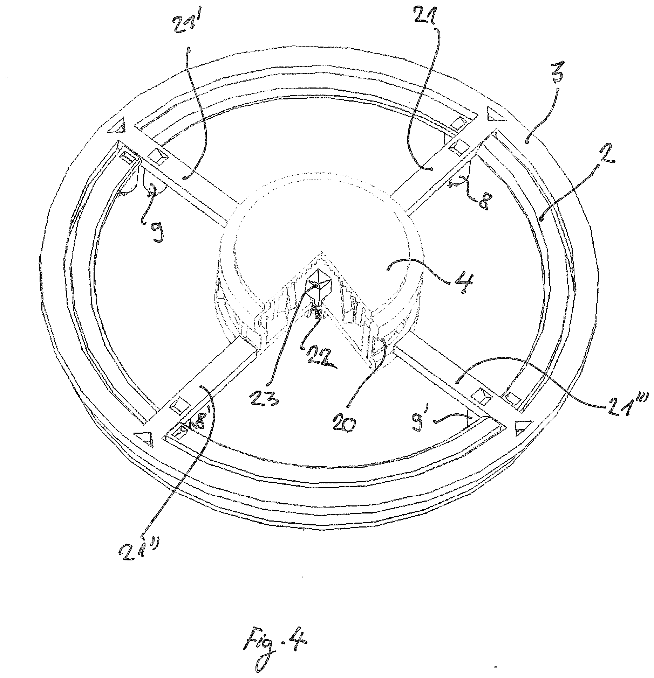

Figur 4 zeigt nun eine ganz spezielle Ausführungsform einer Anordnung, die nicht Teil der beanspruchten Erfindung ist, von zwei Lichtleitern 2, 3, die in dem dargestellten Fall als zwei im wesentlichen konzentrisch angeordnete Ringe ausgebildet sind mit jeweils mindestens einer Ankoppelungsstelle für eine Sendediode 8, 8' und einer Ankoppelungsstelle für eine Empfangsdiode 9 und 9'. In der Ringöffnung der ringförmigen Anordnung der Lichtleiter 2 und 3 ist die Rauchkammer 4 angeordnet mit ihrer Rauchkammer-Raucheintrittsöffnung 20. Diese Rauchkammer-Raucheintrittsöffnung 20 ist typischer Weise beispielsweise mit einem Netz bespannt, welches in der Praxis dazu neigt, mit Staubpartikeln oder aber auch mit kleinen Insekten zugesetzt zu werden, so dass Rauchpartikel unter Umständen nicht mehr ungehindert in das Innere der Rauchkammer 4 gelangen. Die spezielle Ausführungsform dieser Anordnung kann einen solchen Umstand detektieren durch eine zusätzliche Durchgangskontrolle von Sendesignalen durch die Rauchkammer-Raucheintrittsöffnungen 20.

Hierzu sind an den Lichtleiter 3 vier radial angeformte und in die Ringöffnung bis zur Rauchkammer 4 ragende Ansätze 21, 21', 21" und 21'" vorgesehen. Diese Ansätze 21, 21', 21" und 21‴ dienen dazu, Teile der Sendesignale, die sich in dem Lichtleiter 3 ausbreiten, von den Sendedioden 8 und 8' abzuzweigen und in die Rauchkammer 4 durch deren Rauchkammer-Raucheintrittsöffnung 20 zu leiten. Dabei werden die mit Hilfe der Ansätze 21, 21', 21" und 21‴ abgezweigten Sendesignale im Inneren der Rauchkammer 4 einem Prisma 23 zugeführt, welches die Empfangssignale zu einer am Boden der Rauchkammer 4 angeordneten Empfangsdiode 22 weiterleitet. Aus einer Veränderung der von der Empfangsdiode 22 empfangenden Signale wird auf Partikel in der Rauchkammer-Raucheintrittsöffnung 20 geschlossen und ein entsprechendes Warnsignal generiert.

Mit der beschriebenen Ausführungsform wird also nicht nur die Raucheingangsöffnung 5 im Gehäuse 10, sondern auch die Rauchkammer-Raucheintrittsöffnung 20 der Rauchkammer 4 auf Durchgängigkeit für Rauchpartikel überwacht.

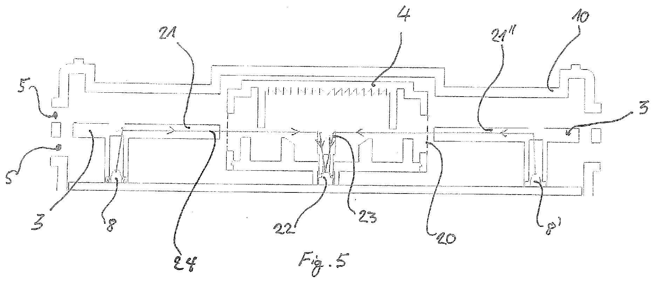

Figur 5 verschafft einen Überblick anhand der schematischen Schnittansicht eines Rauchmelders mit der Anordnung des ringförmigen Lichtleiters 3. Erkennbar ist das Gehäuse 10 mit seiner Raucheingangsöffnung 5, ebenso wie die im Inneren des Gehäuses 10 angeordnete Rauchkammer 4 mit der Rauchkammer-Raucheintrittsöffnung 20, die in Fig. 5 mit einem Netz bespannt ist, wie dies typischerweise in der Praxis der Fall ist. Angedeutet mit dem Bezugszeichen 24 ist der Strahlengang von Sendesignalen, die von den Sendedioden 8 und 8' ausgesandt und von den Ansätzen 21 und 21' abgezweigt werden. Erkennbar ist die Umlenkung der Signale am Prisma 23 hin zu der Empfangsdiode 22 am Boden der Rauchkammer 4.

Figur 4 zeigt nun eine ganz spezielle Ausführungsform der Anordnung von zwei Lichtleitern 2, 3, die in dem dargestellten Fall als zwei im wesentlichen konzentrisch angeordnete Ringe ausgebildet sind mit jeweils mindestens einer Ankoppelungsstelle für eine Sendediode 8, 8' und einer Ankoppelungsstelle für eine Empfangsdiode 9 und 9'. In der Ringöffnung der ringförmigen Anordnung der Lichtleiter 2 und 3 ist die Rauchkammer 4 angeordnet mit ihrer Rauchkammer-Raucheintrittsöffnung 20. Diese Rauchkammer-Raucheintrittsöffnung 20 ist typischer Weise beispielsweise mit einem Netz bespannt, welches in der Praxis dazu neigt, mit Staubpartikeln oder aber auch mit kleinen Insekten zugesetzt zu werden, so dass Rauchpartikel unter Umständen nicht mehr ungehindert in das Innere der Rauchkammer 4 gelangen. Die spezielle Ausführungsform dieser Anordnung kann einen solchen Umstand detektieren durch eine zusätzliche Durchgangskontrolle von Sendesignalen durch die Rauchkammer-Raucheintrittsöffnungen 20.

Hierzu sind an den Lichtleiter 3 vier radial angeformte und in die Ringöffnung bis zur Rauchkammer 4 ragende Ansätze 21, 21', 21" und 21‴ vorgesehen. Diese Ansätze 21, 21', 21" und 21‴ dienen dazu, Teile der Sendesignale , die sich in dem Lichtleiter 3 ausbreiten, von den Sendedioden 8 und 8' abzuzweigen und in die Rauchkammer 4 durch deren Rauchkammer-Raucheintrittsöffnung 20 zu leiten. Dabei werden die mit Hilfe der Ansätze 21, 21', 21" und 21‴ abgezweigten Sendesignale im Inneren der Rauchkammer 4 einem Prisma 23 zugeführt, welches die Empfangssignale zu einer am Boden der Rauchkammer 4 angeordneten Empfangsdiode 22 weiterleitet. Aus einer Veränderung der von der Empfangsdiode 22 empfangenden Signale wird auf Partikel in der Rauchkammer-Raucheintrittsöffnung 20 geschlossen und ein entsprechendes Warnsignal generiert.

Mit der beschriebenen Ausführungsform wird also nicht nur die Raucheintrittsöffnung 5 im Gehäuse 10, sondern auch die Rauchkammer-Raucheintrittsöffnung 20 der Rauchkammer 4 auf Durchgängigkeit für Rauchpartikel überwacht.

Figur 5 verschafft einen Überblick anhand der schematischen Schnittansicht eines Rauchmelders mit der Anordnung des ringförmigen Lichtleiters 3. Erkennbar ist das Gehäuse 10 mit seiner Raucheintrittsöffnung 5, ebenso wie die im Inneren des Gehäuses 10 angeordnete Rauchkammer 4 mit der Rauchkammer-Raucheintrittsöffnung 20, die in Fig. 5 mit einem Netz bespannt ist, wie dies typischerweise in der Praxis der Fall ist. Angedeutet mit dem Bezugszeichen 24 ist der Strahlengang von Sendesignalen, die von den Sendedioden 8 und 8' ausgesandt und von den Ansätzen 21 und 21' abgezweigt werden. Erkennbar ist die Umlenkung der Signale am Prisma 23 hin zu der Empfangsdiode 22 am Boden der Rauchkammer 4.

## Patentansprüche

1. Rauchmelder für geschlossene Räume mit einem Gehäuse (10), das eine Raucheingangsöffnung (5) aufweist und das eine separate Rauchkammer (4) mit einer Rauchkammer-Raucheintrittsöffnung (20) beherbergt, in der eine Messelektronik angeordnet ist, die bei Detektion von Rauchpartikeln ein auswertbares Messsignal generiert, wobei
im Gehäuse (10) zwei transparente lichtleitende Medien (2, 3) vorgesehen sind, wobei jedem dieser transparenten lichtleitenden Medien (2, 3) jeweils eine Sendediode (6, 8) und jeweils eine Empfangsdiode (7, 9) zum Empfang der Sendesignale von der Sendediode zugeordnet ist, bei dem die lichtleitenden Medien (2,3) die Raucheingangsöffnung (5) im Gehäuse (10) einfassen, wobei aus einer Veränderung der empfangenen Sendesignale an mindestens einer Empfangsdiode (7,9) auf eine zumindest teilweise Abdeckung der Raucheingangsöffnung (5) im Gehäuse (10) und/oder auf Partikel in der Raucheingangssöffnung (5) in dem Gehäuse (10) geschlossen und ein Warnsignal generiert wird, wobei diezwei transparenten lichtleitenden Medien (2,3) in Form von Lichtleitern vorgesehen sind, die voneinander beabstandet und parallel zueinander angeordnet sind, wobei der Spalt zwischen den Lichtleitern die Raucheingangsöffnung (5) im Gehäuse (10) bildet.

2. Rauchmelder nach Anspruch 1, bei dem die einander zugewandten Seiten der transparenten lichtleitenden Medien (2,3) plan sind.

3. Rauchmelder nach Anspruch 1, bei dem die einander zugewandten Seiten der transparenten lichtleitenden Medien (2,3) auf ihren Oberflächen lichteinkoppelnde Stellen (13) und lichtauskoppelnde Stellen (12) aufweisen, die so zueinander ausgerichtet sind, dass Licht aus den lichtaustretenden Stellen (12) des einen Mediums (3) ausgekoppelt und direkt in die lichteinkoppelnden Stellen (13) des anderen Mediums (2) eingekoppelt wird.

## Claims

1. Smoke detector for closed spaces comprising a housing (10) which has a smoke entry opening (5) and which accommodates a separate smoke chamber (4) with a smoke chamber smoke inlet opening (20), in which an electronic measuring system is arranged which generates an evaluable measuring signal when smoke particles are detected, wherein two transparent light-conducting media (2, 3) are provided in the housing (10), wherein each of these transparent light-guiding media (2, 3) is associated respectively one transmitting diode (6, 8) and respectively one receiving diode (7, 9) for receiving the transmitted signals from the transmitting diode, in which the light-guiding media (2, 3) enclose the smoke input opening (5) in the housing (10), wherein a change in the received transmitted signals at at least one receiving diode (7, 9) indicates at least a partial covering of the smoke inlet opening (5) and/or particles in the smoke inlet opening (5) in the housing (10) and a warning signal is generated, wherein the two transparent light-guiding media (2, 3) are provided in the form of light conductors which are spaced apart from one another and are arranged parallel to one another, wherein the gap between the light conductors forms the smoke inlet opening (5) in the housing (10).

2. Smoke detector according to claim 1, wherein the sides of the transparent light-guiding media (2, 3) facing each other are planar.

3. Smoke detector according to claim 1, wherein the sides of the transparent light-guiding media (2, 3) facing each other comprise light-incoupling points (13) and light-outcoupling points (12) on their surfaces, which are aligned with one another in such a way that light from the light-outcoupling points (12) of the one medium (3) is coupled out and is directly coupled into the light-incoupling points (13) of the other medium (2).

## Revendications

1. Détecteur de fumée destinés à des espaces clos, ledit détecteur comprenant un boîtier (10) qui comporte une ouverture d'entrée de fumée (5) et qui abrite une chambre de fumée séparée (4) qui est pourvue d'une ouverture d'entrée de fumée (20) et dans laquelle est disposée une électronique de mesure qui, lorsque des particules de fumée sont détectées, génère un signal de mesure qui peut être évalué, dans lequel deux milieux photoconducteurs transparents (2, 3) sont prévus dans le boîtier (10), chacun de ces milieux photoconducteurs transparents (2, 3) étant associé à une diode émettrice respective (6, 8) et à une diode réceptrice respective (7, 9) afin de recevoir les signaux d'émission de la diode émettrice, dans lequel les milieux photoconducteurs (2, 3) entourent l'ouverture d'entrée de fumée (5) dans le boîtier (10), une modification des signaux d'émission reçus au niveau d'au moins une diode réceptrice (7, 9) permettant de conclure que l'ouverture d'entrée de fumée (5) ménagée dans le boîtier (10) est au moins partiellement recouverte et/ou que des particules sont présentes dans l'ouverture d'entrée de fumée (5) ménagées dans le boîtier (10) et un signal d'avertissement étant généré, les deux milieux photoconducteurs transparents (2, 3) étant prévus sous la forme de guides de lumière qui sont espacés l'un de l'autre et disposés parallèlement l'un à l'autre, l'intervalle ménagé entre les guides de lumière formant l'ouverture d'entrée de fumée (5) dans le boîtier (10).

2. Détecteur de fumée selon la revendication 1, dans lequel les côtés dirigés l'un vers l'autre des milieux photoconducteurs transparents (2, 3) sont plans.

3. Détecteur de fumée selon la revendication 1, les côtés dirigés l'un vers l'autre des milieux photoconducteurs transparents (2, 3) comportant sur leurs surfaces des points d'injection de lumière par couplage (13) et des points de sortie de lumière par couplage (12) qui sont orientés les uns par rapport aux autres de manière à ce que la lumière sorte par couplage des points de sortie de lumière (12) de l'un des milieux (3) et soit injectée par couplage directement dans les points d'injection de lumière par couplage (13) de l'autre milieu (2).
